# EUROPEAN PATENT SPECIFICATION

(11) **EP 3 203 562 B1**
(45) Date of publication and mention of the grant of the patent: **17.10.2018**
(21) Application number: 17151564.6
(22) Date of filing: 16.01.2017
(51) Int. Cl.: H01M 8/04223, H01M 8/04746, H01M 8/04291, H01M 8/04492, H01M 8/0612

(54) **WATER REMOVING METHOD FOR A FUEL CELL SYSTEM**
WASSERENTFERNUNGSVERFAHREN FÜR EIN BRENNSTOFFZELLENSYSTEM
PROCÉDÉ D'ÉLIMINATION D'EAU POUR UN SYSTÈME DE PILE À COMBUSTIBLE

(30) Priority: 03.02.2016 JP 2016019136
(43) Date of publication of application: 09.08.2017
(73) Proprietor: AISIN SEIKI KABUSHIKI KAISHA, Aichi 448-8650 (JP)
(72) Inventor: TANIGUCHI, Hiroya, Kariya-shi,, Aichi 448-8650 (JP); OKAWARA, Hiroki, Kariya-shi,, Aichi 448-8650 (JP)
(74) Representative: TBK

(56) References cited:
- US-A1- 2004 247 958
- US-A1- 2006 083 960
- US-A1- 2008 063 902
- US-A1- 2009 130 529

## Description

### TECHNICAL FIELD

This disclosure generally relates to a fuel cell system.

### BACKGROUND DISCUSSION

A known fuel cell system is disclosed. for example, in WO2010125734A which is hereinafter referred to as Reference 1. The fuel cell system disclosed in Reference 1 includes a water circulation passage where water required for an operation of the fuel cell system circulates. The water circulation passage is divided into plural blocks at which drain valves are provided respectively so that a drain process is achievable per block in the plural blocks.

In the fuel cell system disclosed in Reference 1, in a case where a pump which circulates water for reforming is provided with a check valve, it is considerable that the water within the pump is not discharged and remains within the pump. In a case where the water within the pump is not discharged to the outside of the pump, the pump may be damaged due to freezing of the water within the pump.

A need thus exists for a fuel cell system including a pump from which water is removable even in a case where a check valve is provided at the pump.

Further background art is known from the following documents:
US 2006/083960 A1 discloses a fuel cell system comprising a steam generator, a reformer, a water tank, a controller controlling a rate of supply of water to the steam generator, and a water pump, wherein the pump is a plunger pump having an intake valve and an outlet valve.
US 2004/247958 A1 discloses a water supply system for a fuel cell, which includes: a water storage tank; a pump which is located above a water level in the tank and supplies water to the fuel cell; a first passage from the pump to the fuel cell, which has a first portion placed in a position below a discharge port of the pump; an air compressor which supplies air to the tank and the first passage; a second passage which is connected to the first portion of the first passage and opened to the atmosphere; a valve provided on the second passage, which discharges water remaining in either the pump or the first passage through the second passage; and a controller for controlling the valve, which opens the valve as the water supply to the fuel cell is stopped. In this system, the water within the fuel cell stack is discharged with air pressure of the air compressor.

### SUMMARY

This invention provides a water removing method of a fuel cell system according to claim 1. In particular, according to an aspect of this disclosure, a fuel cell system includes a fuel cell generating electric power by fuel and oxidant gas, an evaporating portion generating water vapor from water for reforming, a reforming portion generating the fuel by source material for reforming and the water vapor to supply the fuel to the fuel cell, a water tank storing the water for reforming, a water pump supplying the water for reforming which is stored at the water tank to the evaporating portion, a drainage mechanical portion discharging the water for reforming at a primary side of the water pump to an outside, and a control unit controlling at least a driving amount of the water pump. The water pump includes a housing, a first flow passage provided at the housing to connect between a pump chamber within the housing and an inlet opening to which the water for reforming from the water tank flows, a second flow passage provided at the housing to connect between the pump chamber and an outlet opening out of which the water for reforming from the pump chamber flows, a first check valve provided at the first flow passage to permit a flow of the water for reforming in a first direction in which the water for reforming flows from the water tank towards the evaporating portion and to restrict the flow of the water for reforming in an opposite direction from the first direction, and a second check valve provided at the second flow passage to permit the flow of the water for reforming in the first direction and to restrict the flow of the water for reforming in the opposite
direction from the first direction. The control unit includes a water removal control portion which executes a water removal control for removing the water for reforming from the water pump by driving the water pump by a predetermined driving amount in a case where the water for reforming at the primary side of the water pump is discharged by the drainage mechanical portion.

In the water pump, the first and second check valves are provided at the first flow passage and the second flow passage respectively. Thus, in a case where a supply of the water for reforming to the evaporating portion is stopped, the water remains within the pump chamber. Then, in a case where the water at the primary side of the water pump is discharged, the control unit performs the water removal control. According to the water removal control, the water is removed from the water pump by driving the water pump by the predetermined driving amount. When the water at the primary side of the water pump is discharged, the primary side of the water pump is in communication with air. The first check valve is opened by the driving of the water pump by the water removal control and the air at the primary side of the water pump flows into the pump chamber via the first flow passage from the inlet opening. Further, the water within the pump chamber flows to the second flow passage to open the second check valve and flows out from the outlet opening. The water removal from the water pump is thus performed. Even in a case where the check valves are provided at the water pump, the water removal from the water pump is achievable.

The water tank includes a water level sensor detecting a water level of the water for reforming stored at the water tank. The control unit includes a drainage determination portion determining whether or not the water for reforming at the primary side of the water pump is discharged on a basis of a water level of the water for reforming stored at the water tank. The water removal control portion executes the water removal control in a case where the drainage determination portion determines that the water for reforming at the primary side of the water pump is discharged.

Accordingly, the control unit may determine that the water at the primary side of the water pump is discharged on a basis of a detection result of the water level sensor. Thus, the control unit performs the water removal control in a case where the water at the primary side of the water pump is discharged and the primary side of the water pump is in communication with the air. The water removal from the water pump may be thus securely performed.

The water pump is a plunger pump where the water for reforming stored at the water tank flows into the pump chamber from the inlet opening and the water for reforming within the pump chamber flows out from the outlet opening by a change in volume of the pump chamber based on a reciprocation of a plunger.

Accordingly, even in a case where the water pump is the plunger pump, the control unit may perform the water removal from the water pump.

The water pump generates a vibration by a collision of the plunger with a collided portion with which the plunger is collided during the reciprocation of the plunger. The control unit includes a water removal determination portion which determines whether or not the removal of the water for reforming from the water pump is completed by the water removal control based on a magnitude of the vibration detected by a vibration detector which is provided at a transmission portion to which the vibration is transmitted, the transmission portion being arranged at the housing.

Accordingly, in a case where a detected vibration value detected by the vibration detector is equal to or greater than a vibration determination value, the control unit may determine that the water removal from the water pump is completed by the water removal control. Thus, the control unit securely restrains occurrence of a damage of the water pump caused by freezing of the water within the pump chamber.

### BRIEF DESCRIPTION OF THE DRAWINGS

The foregoing and additional features and characteristics of this disclosure will become more apparent from the following detailed description considered with the reference to the accompanying drawings, wherein:
Fig. 1 is a schematic view illustrating a fuel cell system according to a first embodiment disclosed here;
Fig. 2 is an axially cross-sectional view illustrating a water pump illustrated in Fig. 1 in a state where a coil is not supplied with electric power;
Fig. 3 is an axially cross-sectional view illustrating the water pump illustrated in Fig. 1 in a state where the coil is supplied with the electric power;
Fig. 4 is a block diagram of the fuel cell system illustrated in Fig. 1;
Fig. 5 is a flowchart of a control program performed by a control unit illustrated in Fig. 4;
Fig. 6 is a time-chart illustrating an operation of the fuel cell system operated on a basis of the flowchart in Fig. 5;
Fig. 7 is a block diagram of the fuel cell system according to a second embodiment disclosed here; and
Fig. 8 is a schematic view illustrating a drainage mechanical portion according to a modified example of the first and second embodiments.

### DETAILED DESCRIPTION

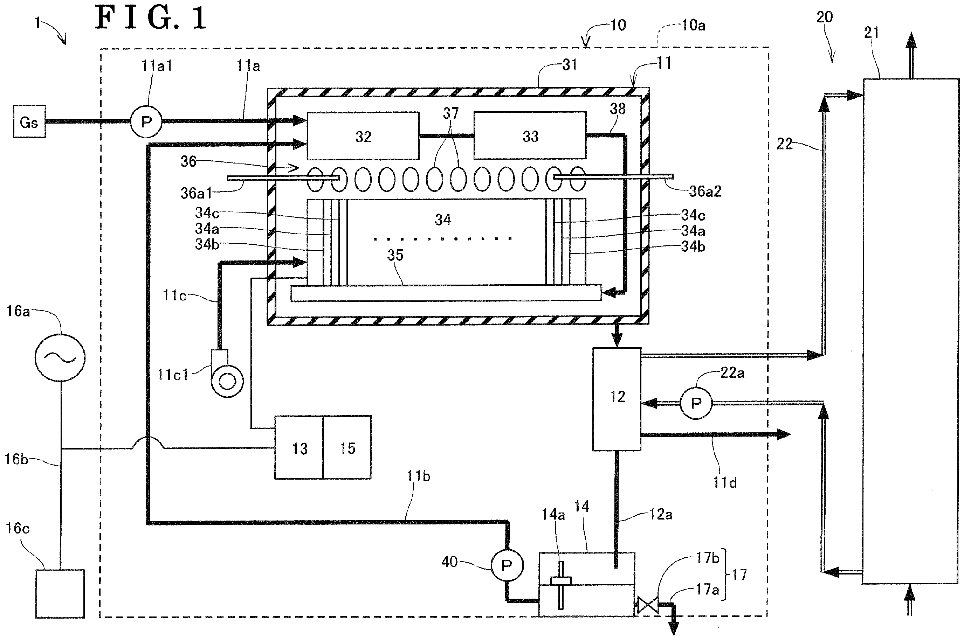

A first embodiment of a fuel cell system is explained with reference to Figs. 1 to 6. In the disclosure, for convenience, the explanation is made under conditions where an upper side in each of Figs. 1 to 3 corresponds to an upper side of a fuel cell system 1 while a lower side in each of Figs. 1 to 3 corresponds to a lower side of the fuel cell system 1. As illustrated in Fig. 1, the fuel cell system 1 includes a power generation unit 10 and a water storage tank 21 which stores water (hot or warmed water). The power generation unit 10 includes a case 10a, a fuel cell module 11, a heat exchanger 12, an inverter device 13, a water tank 14 and a control unit 15.

The fuel cell module 11 is configured to include at least a fuel cell 34. The fuel cell module 11 is supplied with a source material for reforming (source material), water for reforming (water) and cathode air. Specifically, the fuel cell module 11 is connected to a first end of a source material supply pipe 11a of which a second end is connected to a supply source Gs so that the source material supply pipe 11a is supplied with the source material. A source material pump 11a1 which pumps the source material is provided at the source material supply pipe 11a. The fuel cell module 11 is also connected to a first end of a water supply pipe 11b of which a second end is connected to the water tank 14 so that the water supply pipe 11b is supplied with the water. The water tank 14 stores the water for reforming. A water pump 40 which is explained later is disposed at the water supply pipe 11b. The fuel cell module 11 is further connected to a first end of a cathode air supply pipe 11c of which a second end is connected to a cathode air blower 11c1 so that the cathode air supply pipe 11c is supplied with the cathode air.

The heat exchanger 12 is supplied with exhaust combustion gas emitted or discharged from the fuel cell module 11 and with storage water stored at the water storage tank 21 to perform a heat exchange between the exhaust combustion gas and the storage water. Specifically, the water storage tank 21 which stores water (hot or warmed water) serving as the storage water is connected to a storage water circulation line 22 where the water (storage water) circulates in a direction indicated by arrows in Fig. 1. A storage water circulation pump 22a and the heat exchanger 12 are arranged at the storage water circulation line 22 in the mentioned order from a lower end to an upper end of the water storage tank 21. An exhaust pipe 11d which extends from the fuel cell module 11 is connected to the heat exchanger 12 in a penetration manner. A condensed water supply pipe 12a which is connected to the water tank 14 is connected to the heat exchanger 12.

The exhaust combustion gas from the fuel cell module 11 is led to the heat exchanger 12 by flowing through the exhaust pipe 11d and is condensed and cooled at the heat exchanger 12 because of the heat exchange with the storage water. The exhaust combustion gas after condensation flows through the exhaust pipe 11d to be discharged to the outside of the case 10a. Condensed water resulting from the aforementioned heat exchange flows through the condensed water supply pipe 12a so as to be supplied to the water tank 14. The water tank 14 brings the condensed water to be formed into pure water (deionized water) by means of ion-exchange resin.

The heat exchanger 12, the water storage tank 21 and the storage water circulation line 22 constitute an exhaust heat recovery system 20. The exhaust heat recovery system 20 recovers exhaust heat of the fuel cell module 11 and stores the exhaust heat in the storage water.

The inverter device 13 receives a direct-current (DC) voltage output from the fuel cell 34 and converts the DC voltage into a predetermined alternating-current (AC) voltage so as to output the AC voltage to a power line 16b connected to an alternating system power supply 16a (hereinafter simply referred to as a system power supply 16a) and to an external electric power load 16c such as an electrical appliance, for example. The inverter device 13 also receives an AC voltage from the system power supply 16a via the power line 16b and converts the AC voltage into a predetermined DC voltage so as to output the DC voltage to an auxiliary machinery (each pump or blower) and the control unit 15. The control unit 15 drives the auxiliary machinery to thereby control the operation of the fuel cell system 1.

The fuel cell module 11 includes a casing 31, an evaporating portion 32, a reforming portion 33 and the fuel cell 34. The casing 31 in a box form is made of an insulative material. The evaporating portion 32 which is heated by combustion gas (which is explained later) generates water vapor by evaporating the water (water for reforming) supplied to the evaporating portion 32. The evaporating portion 32 also preheats the source material supplied to the evaporating portion 32. The evaporating portion 32 mixes the water vapor generated in the aforementioned manner and the source material that is preheated so as to supply the mixture to the reforming portion 33. The source material corresponds to gaseous fuel (gaseous fuel for reforming) such as natural gas and liquefied petroleum gas (LP gas), for example, and liquid fuel (liquid fuel for reforming) such as kerosene, gasoline (petrol) and methanol, for example. In the present present embodiment, the source material is the natural gas.

The evaporating portion 32 is connected to the first end of the source material supply pipe 11a of which the second end is connected to the supply source Gs. The supply source Gs corresponds to a city gas supply pipe or an LP gas cylinder, for example. In addition, the evaporating portion 32 is connected to the first end of the water supply pipe 11b of which the second end is connected to the water tank 14. The water pump 40 is disposed at the water supply pipe 11b. The water pump 40 is arranged at an upper side than a connection portion of the water supply pipe 11b relative to the water tank 14.

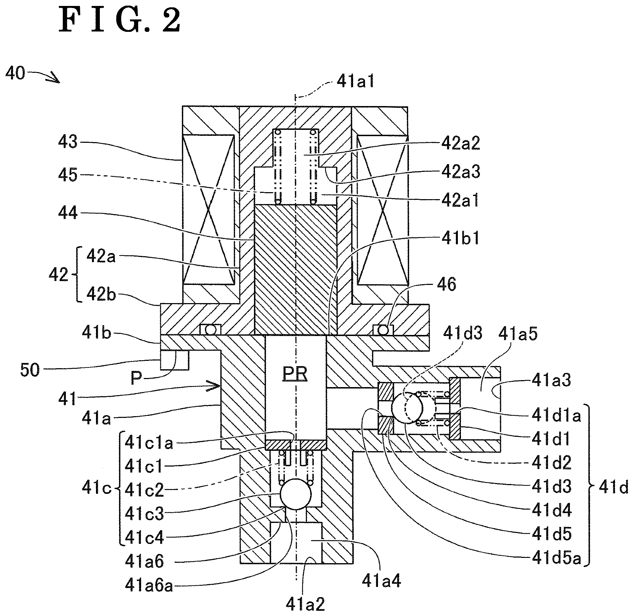

The water pump 40 supplies the water (water for reforming) stored at the water tank 14 to the evaporating portion 32. The water pump 40 serves as a plunger pump. As illustrated in Fig. 2, the water pump 40 includes a first housing 41, a second housing 42, a coil 43 in a tubular form, a plunger 44 and a spring 45. Each of the first housing 41 and the second housing 42 serves as a housing.

The first housing 41 includes a body portion 41a, a flange portion 41b, a first check valve 41c and a second check valve 41d. The body portion 41a is cylindrically formed extending in a direction of an axis 41a1. The body portion 41a includes an inlet opening 41a2, an outlet opening 41a3, a first flow passage 41a4 and a second flow passage 41a5. The inlet opening 41a2 is provided at the first housing 41 (specifically, the body portion 41a) to serve as an opening portion to which the water from the water tank 14 flows. The inlet opening 41a2 is connected to the water tank 14 via the water supply pipe 11b. The outlet opening 41a3 is provided at the first housing 41 (specifically, the body portion 41 a) to serve as an opening portion from which the water from a pump chamber PR (which is explained later) arranged within the body portion 41a flows. The outlet opening 41a3 is connected to the evaporating portion 32 via the water supply pipe 11b.

The first flow passage 41a4 is provided at the first housing 41 (specifically, the body portion 41a) to connect between the inlet opening 41a2 and the pump chamber PR. The second flow passage 41a5 is provided at the first housing 41 (specifically, the body portion 41a) to connect between the pump chamber PR and the outlet opening 41a3. The flange portion 41b is provided at an upper end portion of the body portion 41a so as to protrude radially outward over an entire circumference relative to the axis 41a1 of the body portion 41a.

The first check valve 41c, which is provided at the first flow passage 41a4, permits or enables a flow of the water in a direction in which the water flows from the water tank 14 to the evaporating portion 32 and prohibits or restricts the flow of the water in an opposite direction from the first direction. Specifically, the first check valve 41c permits the flow of the water to the pump chamber PR from the inlet opening 41a2 and prohibits the flow of the water to the inlet opening 41a2 from the pump chamber PR.

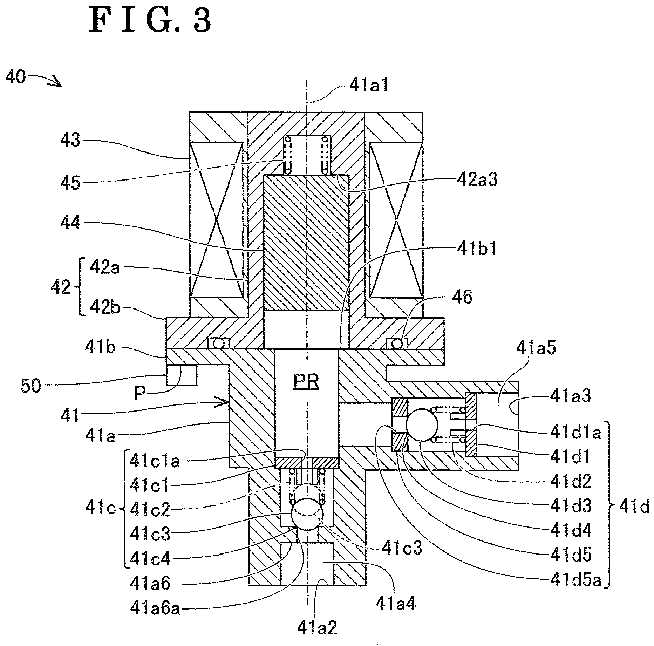

The first check valve 41c includes a first holding plate 41c1, a first spring 41c2, a first valve body 41c3 and a first valve seat 41c4 in the mentioned order from an upper side to a lower side in Fig. 2. A penetration hole 41c1a through which the water may flow is provided at the first holding plate 41c1. The first spring 41c2 is held at the first holding plate 41c1. The first valve body 41c3 in a spherical form is biased by the first spring 41c2. In Fig. 2, the first valve seat 41c4 is provided at an upper-side opening edge of a penetration hole 41a6a which is provided at a partition wall 41a6. The first holding plate 41c1 is fixed to the first flow passage 41a4 by press-fitting, for example. The first check valve 41c includes two states, i.e., the first check valve 41c is selectively brought to a closed state (which is indicated by a solid line in Figs. 2 and 3) where the first valve body 41c3 and the first valve seat 41c4 make contact with each other for prohibiting the flow of the water and to an open state (which is indicated by a dashed line in Fig. 3) where the first valve body 41c3 and the first valve seat 41c4 separate from each other for allowing the flow of the water.

The second check valve 41d, which is provided at the second flow passage 41a5, permits or enables the flow of the water in the first direction in which the water flows from the water tank 14 to the evaporating portion 32 and prohibits or restricts the flow of the water in an opposite direction from the first direction. Specifically, the second check valve 41d permits the flow of the water to the outlet opening 41a3 from the pump chamber PR and prohibits the flow of the water to the pump chamber PR from the outlet opening 41a3.

The second check valve 41d includes a second holding plate 41d1, a second spring 41d2, a second valve body 41d3 and a second valve seat 41d4 in the mentioned order from a right side to a left side in Fig. 2. A penetration hole 41d1a through which the water may flow is provided at the second holding plate 41d1. The second spring 41d2 is held at the second holding plate 41d1. The second valve body 41d3 in a spherical form is biased by the second spring 41d2. In Fig. 2, the second valve seat 41d4 is provided at a right-side opening edge of a penetration hole 41d5a which is provided at a plate member 41d5. The second holding plate 41d1 and the plate member 41d5 are fixed to the second flow passage 41a5 by press-fitting, for example. The second check valve 41d includes two states, i.e., the second check valve 41d is selectively brought to a closed state (which is indicated by a solid line in Figs. 2 and 3) where the second valve body 41d3 and the second valve seat 41d4 make contact with each other for prohibiting the flow of the water and to an open state (which is indicated by a dashed line in Fig. 2) where the second valve body 41d3 and the second valve seat 41d4 separate from each other for allowing the flow of the water.

The second housing 42 includes a cylinder 42a and a flange portion 42b provided at a lower end portion of the cylinder 42a so as to protrude radially outward over an entire circumference relative to the axis 41a1. The second housing 42 is provided in a state where a lower end surface of the flange portion 42b is in contact with an upper end surface of the flange portion 41b of the first housing 41 so as to cover an upper end of the first housing 41. The second housing 42 is fixed to the first housing 41 by a fixing bolt, for example.

The cylinder 42a houses the plunger 44 so that the plunger 44 is reciprocable in the direction of the axis 41a1. The cylinder 42a is coaxial with the axis 41a1 and is cylindrically formed with a bottom in a state where a lower end of the cylinder 42a opens towards the body portion 41a. The cylinder 42a includes a large diameter portion 42a1 for housing the plunger 44 and a small diameter portion 42a2 disposed at an upper side of the large diameter portion 42a1 and including a smaller diameter than the large diameter portion 42a1. The large diameter portion 42a1 and the small diameter portion 42a2 define a first contact portion 42a3 in a stepped form with which an upper end surface of the plunger 44 is contactable. The large diameter portion 42a1 includes a larger diameter than an inner diameter of the body portion 41a. As a result, a second contact portion 41b1 in a stepped form is defined at an upper end surface of the first housing 41 (specifically, the flange portion 41b) so that a lower end surface of the plunger 44 is contactable with the second contact portion 41b1.

The coil 43 is obtained by a conductive wire which is cylindrically wound. The coil 43 is disposed around the cylinder 42a so as to be coaxial therewith. In addition, the coil 43 is arranged so that an upper portion of the plunger 44 from a substantially middle portion thereof is embedded in the coil 43. The coil 43 forms a magnetic field by being powered.

The plunger 44 that is formed in a column form is slidably disposed within the cylinder 42a in a state being coaxial with the first housing 41. The plunger 44 and the cylinder 42a are arranged so that an inner peripheral surface of the cylinder 42a and an outer peripheral surface of the plunger 44 slidably make contact with each other. The upper end surface of the plunger 44 is contactable with the first contact portion 42a3 of the cylinder 42a as illustrated in Fig. 3. In addition, the lower end surface of the plunger 44 is contactable with the second contact portion 41b1 of the first housing 41 as illustrated in Fig. 2.

The spring 45 is disposed between an upper end surface of an inner portion of the cylinder 42a and the upper end surface of the plunger 44 within the cylinder 42a. The spring 45 biases the plunger 44 towards the first housing 41. The water pump 40 further includes a seal member 46 for inhibiting water leakage from between the first housing 41 and the second housing 42. The seal member 46 is annularly formed by an elastic member such as NBR, for example.

The water pump 40 includes the pump chamber PR which is provided between the first valve seat 41c4 of the first check valve 41c and the second valve seat 41d4 of the second check valve 41 d. Specifically, the pump chamber PR is a void defined by the partition wall 41 a6, the first flow passage 41a4, the body portion 41a, the cylinder 42a, the plunger 44, the second flow passage 41a5 and the plate member 41d5. As illustrated in Figs. 2 and 3, a volume of the pump chamber PR varies depending on a reciprocation of the plunger 44.

Next, an operation of the water pump 40 is explained. First, a state where the coil 43 is not supplied with electric power is explained. In a case where the coil 43 is not supplied with the electric power, the plunger 44 is positioned at a lower end portion within the cylinder 42a by a biasing force of the spring 45 as illustrated in Fig. 2. Specifically, in this case, the plunger 44 is positioned so that the lower end surface of the plunger 44 makes contact with the second contact portion 41b1. The first and second valve bodys 41c3 and 41d3 make contact with the first and second valve seats 41c4 and 41d4 by biasing forces of the first and second springs 41c2 and 41d2, respectively. That is, each of the check valves 41c and 41d is in the closed state.

In the aforementioned state, in a case where the coil 43 is supplied with the electric power, the plunger 44 is suctioned upward within the cylinder 42a by the magnetic field formed by the coil 43. The plunger 44 then moves upward within the cylinder 42a against the biasing force of the spring 45. The upper end surface of the plunger 44 is collided with the first contact portion 42a3 serving as a collided portion so as to be positioned in a state where the plunger 44 makes contact with the first contact portion 42a3 as illustrated in Fig. 3. At this time, vibration (oscillation) occurs by the aforementioned collision and is transmitted to the entire second housing 42 and the entire first housing 41. In this case, the volume of the pump chamber PR changes to increase. As a result, in a case where a pressure value within the pump chamber PR decreases to or below a first pressure value, the first valve body 41c3 of the first check valve 41c moves upward against the biasing force of the first spring 41c2. At this time, the first check valve 41c turns to the open state and the water flows into the pump chamber PR by flowing through the first flow passage 41 a4 from the inlet opening 41a2. When the pressure value within the pump chamber PR increases above the first pressure value, the first check valve 41c turns to the closed state. At this time, the second check valve 41d maintains the closed state.

In a case where the power supply to the coil 43 is stopped, the magnetic field formed by the coil 43 disappears. Thus, the plunger 44 moves downward within the cylinder 42a by the biasing force of the spring 45. The lower end surface of the plunger 44 is collided with the second contact portion 41b1 serving as the collided portion so as to be positioned in a state where the plunger 44 makes contact with the second contact portion 41b1 as illustrated in Fig. 2. At this time, vibration (oscillation) occurs by the aforementioned collision and is transmitted to the entire second housing 42 and the entire first housing 41. In this case, the volume of the pump chamber PR changes to decrease. As a result, the water within the pump chamber PR is pressurized to increase the pressure value within the pump chamber PR. In a case where the pressure value within the pump chamber PR becomes equal to or greater than a second pressure value which is greater than the first pressure value, the second valve body 41d3 of the second check valve 41d moves rightward against the biasing force of the second spring 41d2. At this time, the second check valve 41d turns to the open state so that the water flows from the pump chamber PR through the second flow passage 41a5 to be discharged from the outlet opening 41a3.In a case where the pressure value within the pump chamber PR decreases below the second pressure value, the second check valve 41d turns to the closed state. At this time, the first check valve 41c maintains the closed state.

Because of the reciprocation of the plunger 44, the water within the pump chamber PR flows out from the outlet opening 41a3 by a volume corresponding to change in the volume of the pump chamber PR. Thus, in a case where the power supply to the coil 43 is stopped, the volume of the water corresponding to a portion of the pump chamber PR of which volume is inhibited from changing (i.e., a portion of the pump chamber PR within the first housing 41) remains within the pump chamber PR. In addition, because each of the check valves 41c and 41d turns to the closed state, the volume of the water which remains within the pump chamber PR is relatively large.

As mentioned above, the water pump 40 is the plunger pump where the water stored at the water tank 14 flows into the pump chamber PR from the inlet opening 41a2 via the first flow passage 41a4 and the water within the pump chamber PR flows out from the outlet opening 41a3 via the second flow passage 41 a5 because the volume of the pump chamber PR changes depending on the reciprocation of the plunger 44 in a state where the power supply and non-power supply relative to the coil 43 are repeatedly performed.

The fuel cell system 1 further includes a water level sensor 14a, a drainage mechanical portion 17 and a vibration detector 50. As illustrated in Fig. 1, the water level sensor 14a is provided at the water tank 14 to detect a water level of the water (water for reforming) stored at the water tank 14. The water level sensor 14a is a capacitance water level sensor, for example. A detection signal of the water level sensor 14a is output to the control unit 15.

The drainage mechanical portion 17 discharges the water at a primary side of the water pump 40 to the outside of the case 10a. As illustrated in Fig. 1, the drainage mechanical portion 17 includes a drain pipe 17a and a drain valve 17b. The drain pipe 17a connects the inside of the water tank 14 and the outside of the case 10a (air) each other. The water within the water tank 14 is discharged to the outside of the case 10a via the drain pipe 17a. A connection portion of the drain pipe 17a relative to the water tank 14 is positioned at a lower side than the connection portion of the water supply pipe 11b relative to the water tank 14.

The drain valve 17b is provided at the drain pipe 17a. The drain valve 17b includes two states, i.e., the drain valve 17b is selectively brought to an open state where the flow of the water at the drain pipe 17a is allowed and to a closed state where the flow of the water is interrupted. The drain valve 17b is manually switched between the open state and the closed state. The drain valve 17b is disposed at a position at which an operator is able to operate the drain valve 17b. In a case where the drain valve 17b is brought to the open state, the water within the water tank 14 is discharged so that the water level of the water stored at the water tank 14 becomes equal to or lower than the connection portion of the drain pipe 17a relative to the water tank 14.

In addition, as mentioned above, the connection portion of the water tank 14 relative to the water supply pipe 11b is positioned higher than the connection portion of the water tank 14 relative to the drain pipe 17a. Further, a connection portion between the water supply pipe 11b and the water pump 40 is positioned higher than the connection portion between the water tank 14 and the water supply pipe 11b. Thus, in a case where the drain valve 17b is in the open state and the water level of the water tank 14 is equal to or below a lower end of the connection portion between the water tank 14 and the drain pipe 17a, the water in the water supply pipe 11b at a portion between the connection portion of the water supply pipe 11b relative to the water pump 40 and the connection portion of the water supply pipe 11b relative to the water tank 14 is also discharged. As a result, in a case where the water level of the water stored at the water tank 14 is equal to or below the lower end of the connection portion between the water tank 14 and the drain pipe 17a, the water at the primary side of the water pump 40 is discharged.

The vibration detector 50 is arranged at a transmission portion P to which vibration generated by the collision of the plunger 44 upon reciprocation of the plunger 44 is transmitted, thereby detecting the vibration generated by the collision of the plunger 44. The vibration resulting from the collision of the plunger 44 is transmitted over the entire housings 41 and 42 as mentioned above. The transmission portion P is provided at or equal to an outer surface of the flange portion 41b of the first housing 41, for example, as illustrated in Figs. 2 and 3. The vibration detector 50 is an acceleration sensor which detects acceleration of vibration. The vibration detector 50 is a capacitive acceleration sensor, for example. The vibration detector 50 is electrically connected to the control unit 15 so as to send a detection value to the control unit 15.

As illustrated in Fig. 1, the reforming portion 33 generates reformed gas from mixed gas (source material and water vapor) supplied from the evaporating portion 32 and discharges the reformed gas while being heated by the combustion gas so as to receive heat necessary for a water vapor reforming reaction. The inside of the reforming portion 33 is filled with a catalyst, for example, with a Ru catalyst or a Ni catalyst. The mixed gas supplied from the evaporating portion 32 reacts by means of the catalyst so as to be reformed, thereby generating hydrogen gas and gas containing carbon monoxide, for example (so-called a water vapor reforming reaction). The reformed gas includes hydrogen, carbon monoxide, carbon dioxide, water vapor, natural gas (methane gas) that is not reformed, and water (water vapor) not used for reforming. Accordingly, the reforming portion 33 generates the reformed gas (fuel) from the source material (source fuel) and the water and supplies the generated reformed gas to the fuel cell 34. The water vapor reforming reaction is an endothermic reaction.

The fuel cell 34 generates electric power by the fuel and oxidant gas. The fuel cell 34 includes a lamination of plural cells 34a each including a fuel electrode, an air electrode (an oxidant electrode) and an electrolyte disposed between the fuel electrode and the air electrode. The fuel cell 34 in the disclosure is a solid oxide fuel cell where zirconium oxide serving as a solid oxide is used as the electrolyte. The fuel electrode of the fuel cell 34 is supplied with hydrogen, carbon monoxide, and methane gas, for example, as the fuel.

A fuel flow passage 34b through which the reformed gas serving as the fuel flows is formed at the fuel electrode of each of the cells 34a. An air flow passage 34c through which the air serving as the oxidant gas (cathode air) flows is formed at the air electrode of each of the cells 34a.

The fuel cell 34 is placed on a manifold 35. The reformed gas is supplied from the reforming portion 33 to the manifold 35 via a reformed gas supply pipe 38. A lower end (first end) of the fuel flow passage 34b is connected to a fuel lead-out port formed at the manifold 35. The reformed gas led out from the fuel lead-out port of the manifold 35 is introduced from the lower end of the fuel flow passage 34b and is discharged from an upper end of the fuel flow passage 34b. The cathode air sent from the cathode air blower 11c1 flows through the cathode air supply pipe 11c so as to be supplied from a lower end of the air flow passage 34c and be discharged from an upper end of the air flow passage 34c.

A combusting portion 36 is disposed among the fuel cell 34, the evaporating portion 32 and the reforming portion 33. The combusting portion 36 heats the evaporating portion 32 and the reforming portion 33 by burning anode off-gas (fuel off-gas) from the fuel cell 34 and cathode off-gas (oxidant off-gas) from the fuel cell 34.

The anode off-gas is burnt at the combusting portion 36 so as to generate the combustion gas (i.e., flames 37). In the combusting portion 36, the anode off-gas is burnt and the exhaust combustion gas thereof is generated. First and second ignition heaters 36a1 and 36a2 are provided at the combusting portion 36 to ignite the anode off-gas. The exhaust combustion gas is discharged to the outside of the case 10a from the exhaust pipe 11d as mentioned above.

The fuel cell system 1 is constructed in the aforementioned manner so that a secondary side of the water pump 40 is connected to the outside of the case 10a via the water supply pipe 11b, the evaporating portion 32, the reforming portion 33, the reformed gas supply pipe 38, the manifold 35, the fuel flow passage 34b of the fuel cell 34, the combusting portion 36 and the exhaust pipe 11d. That is, the secondary side of the water pump 40 is connected to the air.

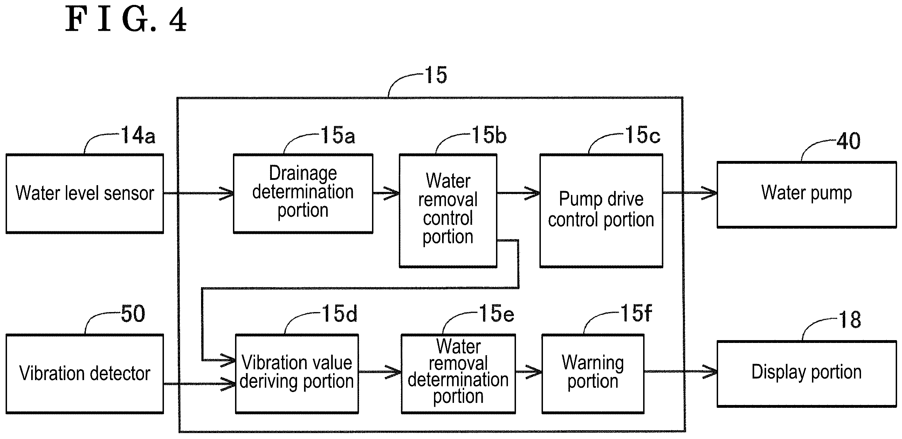

The control unit 15 controls at least a driving amount of the water pump 40. As illustrated in Fig. 4, the control unit 15 includes a drainage determination portion 15a, a water removal control portion 15b, a pump drive control portion 15c, a vibration value deriving portion 15d, a water removal determination portion 15e and a warning portion 15f.

The drainage determination portion 15a determines whether or not the water at the primary side of the water pump 40 is discharged on a basis of the water level of the water stored at the water pump 40 detected by the water level sensor 14a. Specifically, in a case where the water level of the water tank 14 detected by the water level sensor 14a is equal to or smaller than a water level determination value, the drainage determination portion 15a determines that the water at the primary side of the water pump 40 is discharged. The water level determination value is specified as the lower end of the connection portion at the water tank 14 relative to the drain pipe 17a. In a case where the water level of the water stored at the water tank 14 is equal to or lower than the lower end of the connection portion at the water tank 14 relative to the drain pipe 17a, i.e., equal to or smaller than the water level determination value, the water at the primary side of the water pump 40 is discharged from the drain pipe 17a as mentioned above. The determination result of the drainage determination portion 15a is output to the water removal control portion 15b.

In a case where the water at the primary side of the water pump 40 is discharged by the drainage mechanical portion 17, the water removal control portion 15b executes a water removal control for removing the water from the water pump 40 by driving the water pump 40 by a predetermined driving amount. Specifically, in a case where the drainage determination portion 15a determines that the water at the primary side of the water pump 40 is discharged, the water removal control portion 15b outputs a signal to the pump drive control portion 15c so as to drive the water pump 40 by the predetermined driving amount to thereby perform the water removal control. The predetermined driving amount is specified so that the reciprocation of the plunger 44 is performed by a first predetermined number of times (for example, five times). That is, the predetermined driving amount corresponds to an amount of reciprocation of the plunger 44 resulting from the repetition of power supply and non-power supply relative to the coil 43 by the first predetermined number of times. In addition, the first predetermined number of times is specified to be the number of times of reciprocation of the plunger 44 so that the volume of the water flowing out from the outlet opening 41a3 is greater than a volume (capacity) of the pump chamber PR.

Because of the water removal control, the air flows into the pump chamber PR and the water within the pump chamber PR flows out from the outlet opening 41a3, i.e., water removal is conducted, which is explained later. When the water removal control is started and finished, a signal indicating the start and the finish of the water removal control is output to the vibration value deriving portion 15d.

The pump drive control portion 15c controls the driving amount of the water pump 40. The water pump 40 is driven by a PWM control. The pump drive control portion 15c outputs a control command value in a duty ratio obtained in the PWM control to a driver circuit of the water pump 40. At this time, the amount of the water flowing out from the outlet opening 41a3 when the plunger 44 reciprocates one time corresponds to an amount of change in the volume of the pump chamber PR. Thus, a flow volume of the water flowing out from the outlet opening 41a3, i.e., a flow volume of the water per unit time, is determined by the number of times of reciprocation of the plunger 44 per unit time. Therefore, adjustment of the flow volume of the water is achieved by adjustment of the number of times (frequency) of reciprocation of the plunger 44 per unit time. Specifically, the duty ratio is adjusted by the pump drive control portion 15c to thereby adjust the number of times (frequency) of repetition of the power supply and non-power supply relative to the coil 43 per unit time. A target flow volume of the water is specified beforehand on a basis of a power generation amount of the fuel cell 34 and is stored at the control unit 15. The flow volume of the water is specified within a range from approximately 0.3 mL to 30 mL/min.

The vibration value deriving portion 15d derives and obtains a detected vibration value Vr in a time period from a start point to an end point of the water removal control. The vibration value deriving portion 15d performs FFT frequency analysis based on the detection value from the vibration detector 50 to calculate a magnitude of vibration per frequency. The vibration value deriving portion 15d then derives a maximum value of the magnitude of vibration per frequency as the detected vibration value Vr.

The water removal determination portion 15e determines whether or not the water removal from the water pump 40 is completed by the water removal control based on the magnitude of vibration detected by the vibration detector 50. Here, a reason why the determination of whether or not the water removal from the water pump 40 is completed by the water removal control is obtainable on a basis of the detected vibration value Vr is explained. In a case where the water removal from the water pump 40 is not completed even by the water removal control, i.e., the volume of the water which remains within the pump chamber PR is relatively large, the water is present between the plunger 44 and the first contact portion 42a3 and between the plunger 44 and the second contact portion 41b1. Because the aforementioned water functions as a buffer for the collision of the plunger 44 with the first contact portion 42a3 and the second contact portion 41b1, the magnitude of vibration of the water pump 40 caused by the collision of the plunger 44, and further the detected vibration value Vr become relatively small. In a case where the detected vibration value Vr derived from the vibration value deriving portion 15d is smaller than a vibration determination value ThV, the water removal determination portion 15e determines that the water removal from the water pump 40 is not completed. The vibration determination value ThV is actually experimentally measured beforehand and is stored at the control unit 15.

On the other hand, in a case where the volume of the water within the pump chamber PR is relatively small because the water within the pump chamber PR flows out by the water removal control, the volume of the water between the plunger 44 and each of the contact portions 42a3 and 41b1 is relatively small. Thus, as compared to a case where the volume of the water which remains within the pump chamber PR is relatively large, the detected vibration value Vr is relatively large. Thus, the completion of the water removal from the water pump 40 is determinable by the water removal determination portion 15e in a case where the water within the pump chamber PR flows out by the water removal control and the detected vibration value Vr derived by the vibration value deriving portion 15d becomes equal to or greater than the vibration determination value ThV. The determination result of the water removal determination portion 15e is output to the warning portion 15f.

In a case where the water removal determination portion 15e determines that the water removal from the water pump 40 is not completed, the warning portion 15f warns about incompletion of the water removal. A signal for warning about the incompletion of the water removal is output to a display portion 18. The display portion 18 is a warning light provided at the case 10a, for example. When the signal indicating the incompletion of the water removal is output, the display portion 18 is turned on. In a case where the water removal determination portion 15e determines that the water removal from the water pump 40 is not completed, it may be considered that the plunger 44 malfunctions due to a damage of the water pump 40.

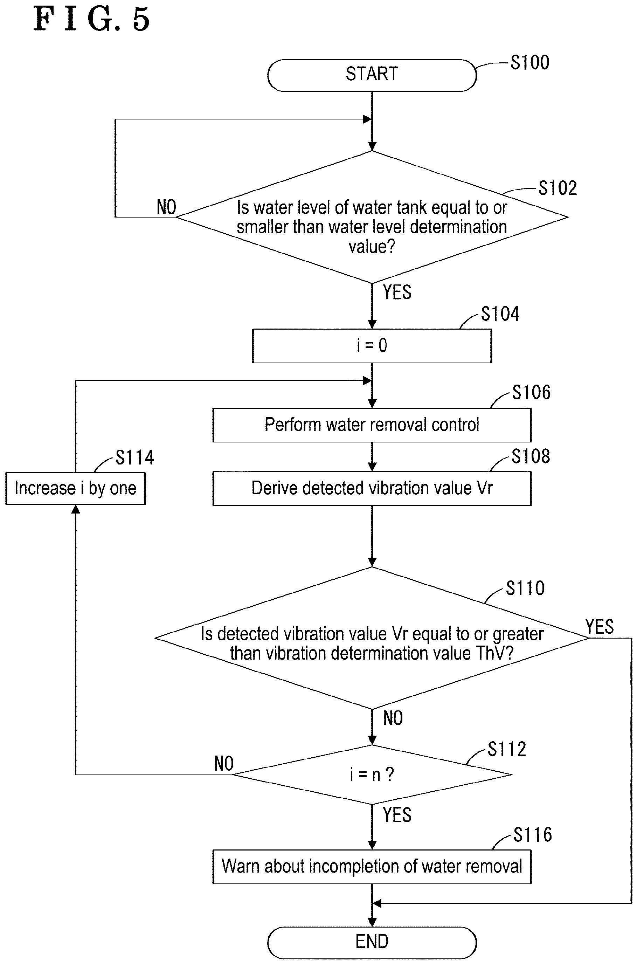

A case where the water removal control is performed by the control unit 15 is explained with reference to a flowchart illustrated in Fig. 5. The control unit 15 performs the water removal control in a case where the fuel cell system 1 is in a standby state. The standby state corresponds to a power generation stop state of the fuel cell system 1, i.e., a state where the fuel cell system 1 is inhibited from performing a startup operation, a power generation operation or a stop operation. That is, the fuel cell system 1 is in a state waiting a power generation instruction such as turning-on of a start switch, for example. In the following, a case where the fuel cell system 1 is shifted to the standby state after finishing the power generation operation and the stop operation is explained. In this case, the supply of the water to the water pump 40 is stopped because the power generation operation and the stop operation are finished. Thus, the volume of the water which remains within the pump chamber PR is relatively large as mentioned above. In addition, the drain valve 17b is in the closed state and the water level of the water stored at the water tank 14 is greater than the water level determination value.

The control unit 15 (specifically, the drainage determination portion 15a) determines whether or not the water at the primary side of the water pump 40 is discharged at step S102. Specifically, the control unit 15 determines whether or not the water level of the water stored at the water tank 14 detected by the water level sensor 14a is equal to or smaller than the water level determination value. In a case where the water within the water tank 14 is not discharged, the water level at the water tank 14 is greater than the water level determination value so that the control unit 15 determines that the water at the primary side of the water pump 40 is not discharged. In this case, the control unit 15 makes a negative determination, i.e., determines "NO", at step S102 so as to repeat the operation of step S102.

On the other hand, in a case where the drain valve 17b is opened by a user, the water in the water tank 14 is discharged from the drain pipe 17a. Then, in a case where the water level at the water tank 14 becomes equal to or smaller than the water level determination value, the control unit 15 determines that the water at the primary side of the water pump 40 is discharged. In this case, the control unit 15 makes a positive determination, i.e., determines "YES", at step S102 so as to proceed program to step S104.

The control unit 15 sets a variable i to zero at step S104. The variable i is provided so as to grasp the number of times the water removal control is performed. The control unit 15 (specifically, the water removal control portion 15b) performs the water removal control at step S106. The control unit 15 (specifically, the vibration value deriving portion 15d) then derives the detected vibration value Vr at step S108.

Next, the control unit 15 (specifically, the water removal determination portion 15e) determines whether or not the water removal from the water pump 40 is completed at step S110. Specifically, the control unit 15 determines whether or not the detected vibration value Vr is equal to or greater than the vibration determination value ThV. In a case where the water within the pump chamber PR is relatively less resulting from the water removal control, the magnitude of vibration of the water pump 40 caused by the collision of the plunger 44 is relatively large as mentioned above. Thus, when the detected vibration value Vr becomes equal to or greater than the vibration determination value ThV, the control unit 15 determines that the water removal from the water pump 40 is completed. In this case, the control unit 15 determines "YES" at step S110 to terminate the program.

On the other hand, in a case where the volume of the water which remains within the pump chamber PR is relatively large even by the water removal control, the magnitude of vibration of the water pump 40 generated by the collision of the plunger 44 is relatively small. Therefore, when the detected vibration value Vr is smaller than the vibration determination value ThV, the control unit 15 determines that the water removal from the water pump 40 is not completed. In this case, the control unit 15 determines "NO" at step S110 and determines whether or not the variable i is equal to a second predetermined number of times n at step S112. The second predetermined number of times n is three, for example. In a case where the variable i is not equal to the second predetermined number of times n, the control unit 15 determines "NO" at step S112 so as to proceed the program to step S114.

The control unit 15 increases the variable i by one at step S114 and returns the program to step S106 so as to again perform the water removal control. Accordingly, in a case where the control unit 15 determines that the water removal from the water pump 40 is not completed, the water removal control is repeated until the variable i reaches the second predetermined number of times n.

In a case where the variable i reaches the second predetermined number of times n, the control unit 15 determines "YES" at step S112. Because the water removal from the water pump 40 is not completed, the control unit 15 (specifically, the warning portion 15f) warns about the incompletion of the water removal from the water pump 40 at step S116. Accordingly, in a case where the control unit 15 determines the second predetermined number of times n that the water removal from the water pump 40 is not completed, the control unit 15 (specifically, the warning portion 15f) warns about the incompletion of the water removal control.

Next, an operation of the fuel cell system 1 in a case where the user removes the water from the water tank 14 while the fuel cell system 1 is in the standby state after the power generation operation and the stop operation is explained. At the time the power generation operation and the stop operation of the fuel cell system 1 are finished, the drain valve 17b is in the closed state. In addition, the water level at the water tank 14 is equal to or greater than the water level determination value and the volume of the water which remains within the pump chamber PR is relatively large.

In a case where the user opens the drain valve 17b, the water in the water tank 14 is discharged so that the water level of the water tank 14 decreases. In a case where the water level of the water tank 14 becomes equal to or smaller than the water level determination value (step S102, the drainage determination portion 15a), the water at the primary side of the water pump 40 is discharged. Thus, the water at the primary side of the water pump 40 is in communication with the air. Further, in this case, the water removal control is performed (step S106, the water removal control portion 15b).

In the water removal control, when the coil 43 is powered, the plunger 44 moves upward to increase the volume of the pump chamber PR. The pressure value within the pump chamber PR therefore decreases to open the first check valve 41c. Because the water at the primary side of the water pump 40 is in communication with the air, the air flows into the pump chamber PR via the first flow passage 41a4 from the inlet opening 41a2. In a case where the power supply to the coil 43 is stopped, the plunger 44 moves downward to decrease the volume of the pump chamber PR. The air and the water within the pump chamber PR are therefore pressurized. The water within the pump chamber PR flows into the second flow passage 41a5 to open the second check valve 41d and flows out from the outlet opening 41a3.Because of the repetition of reciprocation of the plunger 44, the water within the pump chamber PR further flows out from the outlet opening 41a3. The water removal from the water pump 40 is thus performed.

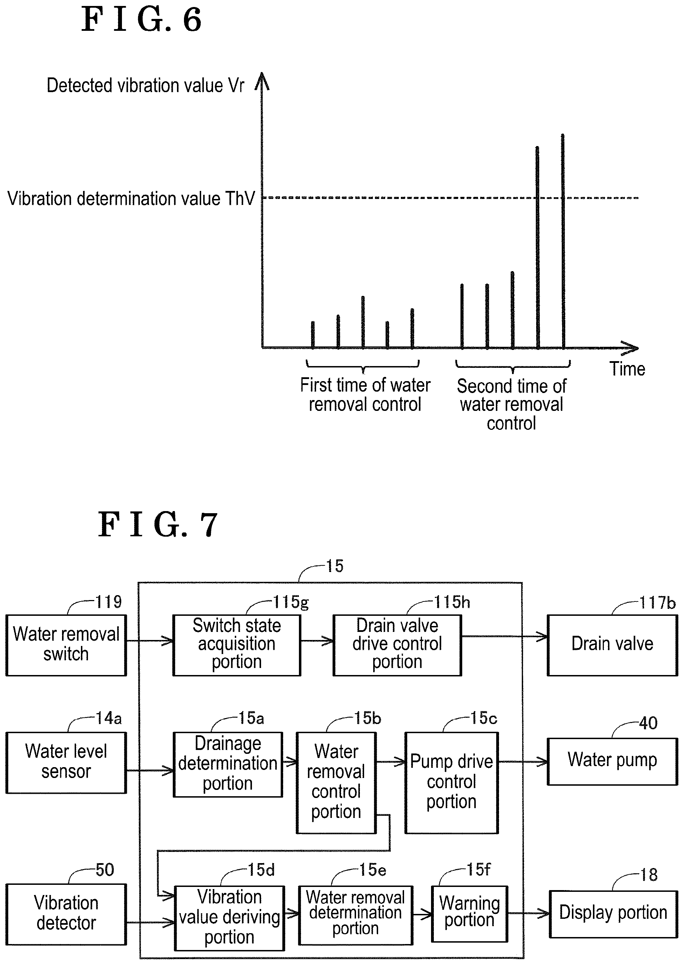

In a case where the water which remains within the pump chamber PR is relatively large even when the water removal control is performed one time (i.e., five times of reciprocation of the plunger 44), the magnitude of vibration of the water pump 40 is relatively small as illustrated in Fig. 6. Thus, the detected vibration value Vr is smaller than the vibration determination value ThV. In a case where the volume of the water within the pump chamber PR becomes relatively small because the water removal control is performed one more time, the magnitude of vibration of the water pump 40 becomes relatively large. Thus, the detected vibration value Vr becomes equal to or greater than the vibration determination value ThV. The water removal from the water pump 40 is completed accordingly (step S110, the water removal determination portion 15e).

On the other hand, in a case where the magnitude of vibration of the water pump 40 is relatively small (i.e., the detected vibration value Vr is smaller than the vibration determination value ThV) even when the water removal control is repeatedly performed, the warning indicating that the water removal is not completed is made (step S116, the warning portion 15f). Because the secondary side of the water pump 40 is in communication with the air as mentioned above, the secondary side of the water pump 40 is not airtightly sealed. Thus, at the secondary side of the water pump 40, a damage or a breakage of the water pump 40 or the water supply pipe 11b is inhibited from occurring even when the water flowing out from the pump chamber PR is frozen so as to increase the volume of the water.

According to the first embodiment, the fuel cell system 1 includes the fuel cell 34 generating the electric power by the fuel and the oxidant gas, the evaporating portion 32 generating the water vapor from the water for reforming, the reforming portion 33 generating the fuel by the source material for reforming and the water vapor to supply the fuel to the fuel cell 34, the water tank 14 storing the water for reforming, the water pump 40 supplying the water for reforming which is stored at the water tank 14 to the evaporating portion 32, the drainage mechanical portion 17 discharging the water for reforming at the primary side of the water pump 40 to the outside and the control unit 15 controlling at least the driving amount of the water pump 40. The water pump 40 includes the housing 41, 42, the first flow passage 41a4 provided at the housing 41 to connect between the pump chamber PR within the housing 41 and the inlet opening 41 a2 to which the water for reforming from the water tank 14 flows, the second flow passage 41a5 provided at the housing 41 to connect between the pump chamber PR and the outlet opening 41a3 out of which the water for reforming from the pump chamber PR flows, the first check valve 41c provided at the first flow passage 41a4 to permit the flow of the water for reforming in the first direction in which the water for reforming flows from the water tank 14 towards the evaporating portion 32 and to restrict the flow of the water for reforming in an opposite direction from the first direction and the second check valve 41d provided at the second flow passage 41a5 to permit the flow of the water for reforming in the first direction and to restrict the flow of the water for reforming in the opposite direction from the first direction. The control unit 15 includes the water removal control portion 15b which executes the water removal control for removing the water for reforming from the water pump 40 by driving the water pump 40 by the predetermined driving amount in a case where the water for reforming at the primary side of the water pump 40 is discharged by the drainage mechanical portion 17. In the water pump 40, the check valves 41c and 41d are provided at the first flow passage 41a4 and the second flow passage 41a5 respectively. Thus, in a case where the water supply to the evaporating portion 32 is stopped, the water remains within the pump chamber PR as mentioned above. Then, in a case where the water at the primary side of the water pump 40 is discharged, the control unit 15 performs the water removal control. According to the water removal control, the water is removed from the water pump 40 by driving the water pump 40 by the predetermined driving amount. When the water at the primary side of the water pump 40 is discharged, the primary side of the water pump 40 is in communication with the air. The first check valve 41c is opened by the driving of the water pump 40 by the water removal control and the air at the primary side of the water pump 40 flows into the pump chamber PR via the first flow passage 41a4 from the inlet opening 41a2. Further, the water within the pump chamber PR flows to the second flow passage 41a5 to open the second check valve 41d and flows out from the outlet opening 41a3. The water removal from the water pump 40 is thus performed. Even in a case where the check valves 41c and 41d are provided at the water pump 40, the water removal from the water pump 40 is achievable.

In addition, the water tank 14 includes the water level sensor 14a detecting the water level of the water for reforming stored at the water tank 40. The control unit 15 includes the drainage determination portion 15a determining whether or not the water for reforming at the primary side of the water pump 40 is discharged on a basis of the water level of the water for reforming stored at the water tank 14. The water removal control portion 15b executes the water removal control in a case where the drainage determination portion 15a determines that the water for reforming at the primary side of the water pump 40 is discharged. Accordingly, the control unit 15 may determine that the water at the primary side of the water pump 40 is discharged on a basis of the detection result of the water level sensor 14a. Thus, the control unit 15 performs the water removal control in a case where the water at the primary side of the water pump 40 is discharged and the primary side of the water pump 40 is in communication with the air. The water removal from the water pump 40 may be thus securely performed.

Further, the water pump 40 is the plunger pump where the water for reforming stored at the water tank 14 flows into the pump chamber PR from the inlet opening 41a2 and the water for reforming within the pump chamber PR flows out from the outlet opening 41a3 by the change in the volume of the pump chamber PR based on the reciprocation of the plunger 44. Accordingly, even in a case where the water pump 40 is the plunger pump, the control unit 15 may perform the water removal from the water pump 40.

Furthermore, the water pump 40 generates the vibration by the collision of the plunger 44 with the contact portion 42a3, 41b1 with which the plunger 44 is collided during the reciprocation of the plunger 44. The control unit 15 includes the water removal determination portion 15e which determines whether or not the removal of the water for reforming from the water pump 40 is completed by the water removal control based on the magnitude of the vibration detected by the vibration detector 50 which is provided at the transmission portion P to which the vibration is transmitted, the transmission portion P being arranged at the housing 41. Accordingly, in a case where the detected vibration value Vr detected by the vibration detector 50 is equal to or greater than the vibration determination value ThV, the control unit 15 may determine that the water removal from the water pump 40 is completed by the water removal control. Thus, the control unit 15 securely restrains occurrence of a damage of the water pump 40 caused by freezing of the water within the pump chamber PR.

Next, a second embodiment of the fuel cell system 1 is explained below. Differences of the second embodiment from the first embodiment are mainly explained. The drain valve 17b in the first embodiment is manually operated. On the other hand, a drain valve 117b in the second embodiment is an electromagnetic valve of which an open state and a closed state are switchable by the control unit 5. In addition, the fuel cell system 1 of the second embodiment includes a water removal switch 119 as illustrated in Fig. 7. Further, the fuel cell system 1 of the second embodiment includes a switch state acquisition portion 115g and a drain valve drive control portion 115h.

The water removal switch 119 is provided at an appropriate position in the case 10a so that the user is able to operate the water removal switch 119. The water removal switch 119 is constituted by a self-return press switch, for example. The switch state acquisition portion 115g acquires a state of the water removal switch 119. The switch state acquisition portion 115g acquires an on state and an off state of the water removal switch 119. In a case where the switch state acquisition portion 115g acquires the on state of the water removal switch 119, the switch state acquisition portion 115g outputs an on signal to the drain valve drive control portion 115h.

The drain valve drive control portion 115h brings the drain valve 117b to the open state for a predetermined time period in a case where the drain valve drive control portion 115h receives the on signal from the switch state acquisition portion 115g. The predetermined time period is specified to be longer than a time period which is defined from a state where the water level of the water tank 14 is full to a state where the water is discharged and the water level of the water tank 14 becomes equal to or smaller than the water level determination value.

Next, an operation of the fuel cell system 1 in a case where the user removes the water from the water tank 14 according to the second embodiment is explained. The user turns on the water removal switch 119 while the fuel cell system 1 is in the standby state after the power generation operation and the stop operation of the fuel cell system 1. Then, the drain valve 117b is brought to the open state for the predetermined time period (which is performed by the drain valve drive control portion 115h). In a case where the water within the water tank 14 is discharged and the water level of the water tank 14 becomes equal to or smaller than the water level determination value, the control unit 15 determines, on a basis of the detection result of the water level sensor 14a, that the water at the primary side of the water pump 40 is discharged based on the flowchart in Fig. 5 (at step S102 corresponding to the drainage determination portion 15a). The control unit 15 performs the water removal from the water pump 40 by following the flowchart in Fig. 5. Accordingly, in the second embodiment, the user may automatically, not manually, perform the water removal from the water tank 14.

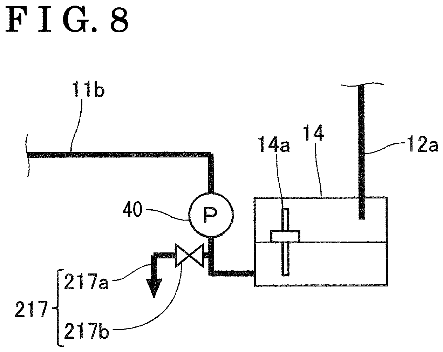

Each of the fuel cell systems in the disclosure is an example and may be constructed differently. For example, the drain pipe 17a of the drainage mechanical portion 17 in each of the first and second embodiments connects or communicates between the inside of the water tank 14 and the outside of the case 10a. Instead, as illustrated in Fig. 8, a drain pipe 217a of a drainage mechanical portion 217 may be provided for connecting a portion of the water supply pipe 11b between the water tank 14 and the water pump 40 and the outside of the case 10a. In this case, the water at the primary side of the water pump 40 is the water that is present at a portion between the connection portion of the water supply pipe 11b relative to the water pump 40 and a connection portion of the water supply pipe 11b relative to the drain pipe 217a and the water that is present at the drain pipe 217a.

In addition, in each of the aforementioned embodiments, the water pump 40 is the plunger pump. Instead, the water pump 40 may be a piston pump or a diaphragm pump at each of which two check valves are provided facing each other relative to the pump chamber. Further, the fuel cell system 1 includes the water level sensor 14a according to the first embodiment. Instead, the fuel cell system 1 may not include the water level sensor 14a and the drainage determination portion 15a. In this case, the water removal control portion 15b may perform the water removal control by turning-on of a switch, for example. Furthermore, in each of the embodiments, the vibration detector 50 is provided at the outer surface of the flange portion 41b of the first housing 41. Instead, the vibration detector 50 may be provided at a side surface of the body portion 41a or an upper surface of the second housing 42.

A fuel cell system (1) includes a fuel cell (34), an evaporating portion (32), a water tank (14), a water pump (40) and a control unit (15), the water pump including a housing (41, 42), a first flow passage (41a4) connecting between a pump chamber (PR) and an inlet opening (41a2), a second flow passage (41a5) connecting between the pump chamber (PR) and an outlet opening (41a3), a first check valve (41c) provided at the first flow passage (41a4) and a second check valve (41d) provided at the second flow passage (41a5), the control unit (15) including a water removal control portion (15b) which executes a water removal control for removing the water from the water pump (40) by driving the water pump by a predetermined driving amount in a case where the water at a primary side of the water pump is discharged by a drainage mechanical portion (17).

## Claims

1. A water removing method of a fuel cell system (1) comprising:
the fuel cell system (1) including:
a fuel cell (34) generating electric power by fuel and oxidant gas;
an evaporating portion (32) generating water vapor from water for reforming;
a reforming portion (33) generating the fuel by source material for reforming and the water vapor to supply the fuel to the fuel cell (34);
a water tank (14) storing the water for reforming;
a water pump (40) supplying the water for reforming which is stored at the water tank (14) to the evaporating portion (32);
a drainage mechanical portion (17) discharging the water for reforming at a primary side of the water pump (40) to an outside; and
a control unit (15) controlling at least a driving amount of the water pump (40),
the water pump (40) further including:
a housing (41, 42);
a first flow passage (41a4) provided at the housing (41, 42) to connect between a pump chamber (PR) within the housing (41, 42) and an inlet opening (41a2) to which the water for reforming from the water tank (14) flows;
a second flow passage (41a5) provided at the housing (41, 42) to connect between the pump chamber (PR) and an outlet opening (41a3) out of which the water for reforming from the pump chamber (PR) flows;
a first check valve (41c) provided at the first flow passage (41a4) to permit a flow of the water for reforming in a first direction in which the water for reforming flows from the water tank (14) towards the evaporating portion (32) and to restrict the flow of the water for reforming in an opposite direction from the first direction; and
a second check valve (41d) provided at the second flow passage (41a5) to permit the flow of the water for reforming in the first direction and to restrict the flow of the water for reforming in the opposite direction from the first direction, **characterized in that**;
the control unit (15) including a water removal control portion (15b) which executes a water removal control for removing the water for reforming from the water pump (40) by driving the water pump (40) by a predetermined driving amount in a case where the water for reforming at the primary side of the water pump (40) is discharged by the drainage mechanical portion (17).

2. The water removing method of the fuel cell system (1) according to claim 1, wherein the water tank (14) includes a water level sensor (14a) detecting a water level of the water for reforming stored at the water tank (40),
the control unit (15) includes a drainage determination portion (15a) determining whether or not the water for reforming at the primary side of the water pump (40) is discharged on a basis of a water level of the water for reforming stored at the water tank (14),
the water removal control portion (15b) executes the water removal control in a case where the drainage determination portion (15a) determines that the water for reforming at the primary side of the water pump (40) is discharged.

3. The water removing method of the fuel cell system (1) according to claim 1 or 2, wherein the water pump (40) is a plunger pump where the water for reforming stored at the water tank (14) flows into the pump chamber (PR) from the inlet opening (41a2) and the water for reforming within the pump chamber (PR) flows out from the outlet opening (41a3) by a change in volume of the pump chamber (PR) based on a reciprocation of a plunger (44).

4. The water removing method of the fuel cell system (1) according to claim 3, wherein the water pump (40) generates a vibration by a collision of the plunger (44) with a collided portion (42a3, 41b1) with which the plunger (44) is collided during the reciprocation of the plunger (44),
the control unit (15) includes a water removal determination portion (15e) which determines whether or not the removal of the water for reforming from the water pump (40) is completed by the water removal control based on a magnitude of the vibration detected by a vibration detector (50) which is provided at a transmission portion (P) to which the vibration is transmitted, the transmission portion (P) being arranged at the housing (41, 42).

## Patentansprüche

1. Wasserentfernungsverfahren eines Brennstoffzellensystems (1), mit:
dem Brennstoffzellensystem (1) einschließlich:
einer Brennstoffzelle (34), die elektrische Leistung durch Brennstoff und Oxidationsgas erzeugt;
einem Verdampfungsabschnitt (32), der Wasserdampf aus Wasser zum Reformieren erzeugt;
einem Reformerteil (33), der den Brennstoff aus Ausgangsmaterial zum Reformieren und dem Wasserdampf erzeugt und den Brennstoff der Brennstoffzelle (34) zuführt;
einem Wassertank (14), der das Wasser zum Reformieren speichert;
einer Wasserpumpe (40), die das Wasser zum Reformieren, das in dem Wassertank (14) gespeichert ist, dem Verdampfungsabschnitt (32) zuführt;
einem mechanischen Drainageabschnitt (17), der das Wasser zum Reformieren an einer Primärseite der Wasserpumpe (40) nach außen abgibt; und
einer Steuereinheit (15), die mindestens einen Antriebsbetrag der Wasserpumpe (40) steuert,
wobei die Wasserpumpe (40) ferner einschließt:
ein Gehäuse (41, 42);
einen ersten Durchflusskanal (41a4), der an dem Gehäuse (41, 42) vorgesehen ist und der eine Pumpenkammer (PR) innerhalb des Gehäuses (41, 42) mit einer Einlassöffnung (41a2) verbindet, zu der das Wasser zum Reformieren aus dem Wassertank (14) fließt;
einen zweiten Durchflusskanal (41a5), der an dem Gehäuse (41, 42) vorgesehen ist und der die Pumpenkammer (PR) mit einer Auslassöffnung (41a3) verbindet, aus der das Wasser zum Reformieren aus der Pumpenkammer (PR) fließt;
ein erstes Rückschlagventil (41c), das an dem ersten Durchflusskanal (41a4) vorgesehen ist, um einen Fluss des Wassers zum Reformieren in einer ersten Richtung zuzulassen, in der das Wasser zum Reformieren von dem Wassertank (14) zu dem Verdampfungsabschnitt (32) fließt, und um den Fluss des Wassers zum Reformieren in einer der ersten Richtung entgegengesetzten Richtung einzuschränken; und
ein zweites Rückschlagventil (41d), das an dem zweiten Durchflusskanal (41a5) vorgesehen ist, um einen Fluss des Wassers zum Reformieren in der ersten Richtung zuzulassen, und um den Fluss des Wassers zum Reformieren in der der ersten Richtung entgegengesetzten Richtung einzuschränken, **dadurch gekennzeichnet, dass**
die Steuereinheit (15) einen Entwässerungssteuerabschnitt (15b) aufweist, der eine Entwässerungssteuerung ausführt, um das Wasser zum Reformieren aus der Wasserpumpe (40) zu entfernen, indem die Wasserpumpe (40) um einen vorbestimmten Antriebsbetrag in einem Fall angetrieben wird, in dem das Wasser zum Reformieren an der Primärseite der Wasserpumpe (40) durch den mechanischen Drainageabschnitt (17) abgegeben wird.

2. Wasserentfernungsverfahren des Brennstoffzellensystems (1) nach Anspruch 1, wobei der Wassertank (14) einen Wasserpegelsensor (14a) umfasst, der einen Wasserpegel des Wassers zum Reformieren erfasst, das in dem Wassertank (40) gespeichert ist,
die Steuereinheit (15) einen Entwässerungsbestimmungsabschnitt (15a) umfasst, der bestimmt, ob das Wasser zum Reformieren auf der Primärseite der Wasserpumpe (40) abgegeben wird oder nicht, auf der Basis eines Wasserpegels des Wassers zum Reformieren, das im Wassertank (14) gespeichert ist,
der Entwässerungssteuerabschnitt (15b) die Entwässerungssteuerung in einem Fall ausführt, in dem der Entwässerungsbestimmungsabschnitt (15a) bestimmt, dass das Wasser zum Reformieren an der Primärseite der Wasserpumpe (40) abgegeben wird.

3. Wasserentfernungsverfahren des Brennstoffzellensystems (1) nach Anspruch 1 oder 2, wobei die Wasserpumpe (40) eine Kolbenpumpe ist, in der das Wasser zum Reformieren, das im Wassertank (14) gespeichert ist, aus der Einlassöffnung (41a2) in die Pumpenkammer (PR) fließt, und in der das Wasser zum Reformieren innerhalb der Pumpenkammer (PR) aus der Austrittsöffnung (41a3) austritt, durch eine Volumenänderung der Pumpenkammer (PR) basierend auf einer Hin- und Herbewegung eines Kolbens (44).

4. Wasserentfernungsverfahren des Brennstoffzellensystems (1) nach Anspruch 3, wobei die Wasserpumpe (40) eine Schwingung erzeugt, durch einen Zusammenstoß des Kolbens (44) mit einem Anschlagabschnitt (42a3, 41b1), mit dem der Kolben (44) während der Hin- und Herbewegung des Kolbens (44) zusammenstößt,
die Steuereinheit (15) einen Entwässerungsbestimmungsabschnitt (15e) umfasst, der bestimmt, ob das Entfernen des Wassers zum Reformieren aus der Wasserpumpe (40) durch die Entwässerungssteuerung abgeschlossen ist oder nicht, basierend auf einer Größe der Schwingung, die durch einen Schwingungsdetektor (50) erfasst wird, der an einem Übertragungsabschnitt (P) vorgesehen ist, an dem die Schwingung übertragen wird, wobei der Übertragungsabschnitt (P) an dem Gehäuse (41, 42) angeordnet ist.

## Revendications

1. Procédé d'élimination d'eau d'un système de pile à combustible (1) comprenant :
le système de pile à combustible (1) comprenant :
une pile à combustible (34) qui génère de l'énergie électrique au moyen d'un combustible et un gaz oxydant ;
une partie d'évaporation (32) qui génère de la vapeur d'eau à partir de l'eau destinée au reformage ;
une partie de reformage (33) qui génère le combustible au moyen d'une matière source destinée au reformage et la vapeur d'eau pour fournir le combustible à la pile à combustible (34) ;
un réservoir d'eau (14) qui stocke l'eau destinée au reformage ;
une pompe à eau (40) qui fournit l'eau destinée au reformage qui est stockée au réservoir d'eau (14) à la partie d'évaporation (32) ;
une partie mécanique d'évacuation (17) qui évacue l'eau destinée au reformage à un côté primaire de la pompe à eau (40) vers un extérieur ; et
une unité de commande (15) qui commande au moins une quantité d'entraînement de la pompe à eau (40),
la pompe à eau (40) comprenant en outre :
un boîtier (41, 42) ;
un premier passage d'écoulement (41a4) qui est ménagé au niveau du boîtier (41, 42) pour assurer une liaison entre une chambre de pompage (PR) à l'intérieur du boîtier (41, 42) et une ouverture d'entrée (41a2) vers laquelle s'écoule l'eau destinée au reformage en provenance du réservoir d'eau (14) ;
un second passage d'écoulement (41a5) qui est ménagé au niveau du boîtier (41, 42) pour assurer une liaison entre la chambre de pompage (PR) et une ouverture de sortie (41a3) depuis laquelle s'écoule l'eau destinée au reformage en provenance de la chambre de pompage (PR) ;
un premier clapet de antiretour (41 c) prévu au niveau du premier passage d'écoulement (41a4) pour autoriser un écoulement de l'eau destinée au reformage dans une première direction dans laquelle l'eau destinée au reformage s'écoule à partir du réservoir d'eau (14) vers la partie d'évaporation (32) et pour restreindre l'écoulement de l'eau destinée au reformage dans une direction opposée à la première direction ; et
un second clapet de antiretour (41d) prévu au niveau du second passage d'écoulement (41a5) pour autoriser l'écoulement de l'eau destinée au reformage dans la première direction et pour restreindre l'écoulement de l'eau destinée au reformage dans la direction opposée à la première direction, **caractérisé en ce que** :
l'unité de commande (15) inclut une partie de commande d'élimination d'eau (15b) qui exécute une commande d'élimination d'eau pour éliminer l'eau destinée au reformage de la pompe à eau (40) en entraînant la pompe à eau (40) suivant une quantité d'entraînement prédéterminée dans le cas où l'eau destinée au reformage au côté primaire de la pompe à eau (40) est évacuée par la partie mécanique d'évacuation (17).

2. Procédé d'élimination d'eau du système de pile à combustible (1) selon la revendication 1, dans lequel le réservoir d'eau (14) inclut un capteur de niveau d'eau (14a) qui détecte un niveau d'eau de l'eau destinée au reformage stockée au réservoir d'eau (40),
l'unité de commande (15) inclut une partie de détermination d'évacuation (15a) qui détermine si oui ou non l'eau destinée au reformage au côté primaire de la pompe à eau (40) est évacuée sur la base d'un niveau d'eau de l'eau destinée au reformage stockée au réservoir d'eau (14),
la partie de commande d'élimination d'eau (15b) exécute la commande d'élimination d'eau dans le cas où la partie de détermination d'évacuation (15a) détermine que l'eau destinée au reformage au côté primaire de la pompe à eau (40) est évacuée.

3. Procédé d'élimination d'eau du système de pile à combustible (1) selon la revendication 1 ou 2, dans lequel la pompe à eau (40) est une pompe à piston plongeur où l'eau destinée au reformage stockée au réservoir d'eau (14) s'écoule dans la chambre de pompage (PR) à partir de l'ouverture d'entrée (41a2) et où l'eau destinée au reformage située à l'intérieur de la chambre de pompage (PR) sort par l'ouverture de sortie (41a3) au moyen d'un changement de volume de la chambre de pompage (PR) basé sur un mouvement de va-et-vient d'un piston plongeur (44).

4. Procédé d'élimination d'eau du système de pile à combustible (1) selon la revendication 3, dans lequel la pompe à eau (40) génère une vibration par une collision du piston plongeur (44) avec une partie soumise à collision (42a3, 41b1) avec laquelle le piston plongeur (44) entre en collision lors du mouvement de va-et-vient du piston plongeur (44),
l'unité de commande (15) inclut une partie de détermination d'élimination d'eau (15e) qui détermine si oui ou non l'élimination de l'eau destinée au reformage à partir de la pompe à eau (40) est achevée par la commande d'élimination d'eau sur la base d'une amplitude de la vibration détectée par un détecteur de vibration (50) qui est prévu au niveau d'une partie de transmission (P) à laquelle est transmise la vibration, la partie de transmission (P) étant agencée au niveau du boîtier (41, 42).
